# EUROPÄISCHE PATENTANMELDUNG

(11) **EP 3 178 852 A1**
(43) Veröffentlichungstag der Anmeldung: **14.06.2017**
(21) Anmeldenummer: 15199563.6
(22) Anmeldetag: 11.12.2015
(51) Int. Cl.: C08B 31/00, C09J 103/02, C09J 103/04

(54) **POLYSACCHARID-KLEBSTOFF**

(71) Anmelder: Agrana Stärke GmbH, 1220 Wien (AT)
(72) Erfinder: WASTYN, Marnik Michel, 3430 Tulln (AT); KOZICH, Martin, 3430 Tulln (AT); SEIDL, Bernhard, 3430 Tulln (AT)
(74) Vertreter: Sonn & Partner Patentanwälte

(57) **Zusammenfassung**

Die vorliegende Erfindung betrifft einen Polysaccharid-Klebstoff enthaltend kovalent vernetzte Stärke als Bindemittel zusammen mit einem Schaumerzeuger, eine wässrige Suspension enthaltend einen derartigen Polysaccharid-Klebstoff sowie die Verwendung eines derartigen Polysaccharid-Klebstoffs zur Herstellung eines Klebstoffschaums.

## Beschreibung

Die vorliegende Erfindung betrifft die Verklebung von Materialien aus natürlichen Fasern, wie Papier bzw. Papierprodukten, mittels eines geschäumten Polysaccharid-Klebstoffs auf wässriger Basis. Eine solche Verklebung ist beispielsweise im Falle der Herstellung von Papiersäcken, Wellpappe und dergleichen nötig. Insbesondere betrifft die Erfindung die Verwendung von vernetzter Stärke für die Herstellung derartiger geschäumter Polysaccharid-Klebstoffe auf wässriger Basis.

Geschäumte Polysaccharid-Klebstoffe auf wässriger Basis sind bereits bekannt und werden beispielsweise in der Verklebung von gewellten Substraten, wie beispielsweise Wellpappe, eingesetzt. Dabei ist es üblich, dass beide Substratteile aus Materialien aus natürlichen Fasern, wie Papier, Karton oder Pappe bestehen.

Weiters können derartige geschäumte Polysaccharid-Klebstoffe auch für die Verklebung von Verbundsubstraten verwendet werden, wobei als Trägermaterial flächenförmige Substrate aus Fasermaterialien, insbesondere aus natürlichen Fasern, geeignet sind. Insbesondere sind beispielsweise Pappe, Karton, verstärktes Papier geeignet, welche auch mit beispielsweise Fasern oder Gewebe verstärkt sein können. Das Trägermaterial hat zumeist eine poröse Oberfläche und kann gegebenenfalls auch bedruckt oder beschichtet sein.

Als zweite Substratschicht, insbesondere zur Herstellung einer äußeren Oberfläche, kommen flexible folienförmige Substrate zum Einsatz. Diese können aus Papier, Gewebe oder Kunststofffolien bestehen, wobei auch Verbundsubstrate eingesetzt werden können. Beispiele für Verbundsubstrate sind Folien verbunden mit Gewebe, laminiertes Papier oder Mehrschichtkunststofffolien. Als folienförmige Substrate sind insbesondere solche aus Kunststoff geeignet, beispielsweise aus Polyethylen, Polypropylen, Polyestern, Polyvinylchlorid (PVC) oder ähnlichen Materialien. Eine andere Ausführungsform setzt insbesondere Papierfolien ein. Die entsprechenden Papier- oder Kunststofffolien sind flexible bahnenförmige Materialien, welche geprägt, bedruckt, pigmentiert, beschichtet, laminiert oder anderweitig behandelt sein können und als Bahn oder als vorgeformtes Blatt eingesetzt werden können. Bevorzugt handelt es sich bei den folienförmigen Substraten um Kunststofffolien, besonders bevorzugt um Folien aus Polyvinylchlorid (PVC), Polyethylen (PE) oder Polypropylen (PP).

Die Verbundsubstrate sind in fertigem Zustand durch eine trockene Klebstoffschicht miteinander verbunden, welche aus einer wässrigen geschäumten Klebstoffdispersion hergestellt wurde. Nach seinem Auftrag trocknet der geschäumte Klebstoff und bildet dabei die stabile Verklebung aus.

So offenbart die US 2005/0045267 A1 Papierlaminate, die unter Verwendung eines geschäumten, wässrigen Klebstoffs hergestellt werden. Durch Einsatz des Klebstoffs in Schaumform wird verhindert, dass der wässrige Klebstoff durch das Substrat durchnässt und dabei das Substrat beschädigt wird. Die zu laminierenden Schichten sind insbesondere aus Papier, können aber auch aus jeglichen geeigneten natürlichen und/oder synthetischen Bestandteilen gebildet sein. Der Klebstoff kann Polysaccharid, einschließlich Stärke, Dextrin, Cellulose und dergleichen enthalten.

Aus der WO 02/00804 A2 und der US 6 280 515 B1 ist ein neuartiges Verfahren zur Herstellung eines geschäumten Polysaccharid-Klebstoffs auf wässriger Basis bekannt, wobei ein Polysaccharid mit Wasser und einem Schaumerzeuger zur Herstellung einer schäumbaren Klebstoffzusammensetzung kombiniert wird, welche Klebstoffzusammensetzung dann unter Einbringung von Energie behandelt wird, um einen Schaum zu produzieren. Als geeignete Polysaccharide bzw. als Basis für modifizierte geeignete Polysaccharide werden Stärke, Dextrin, Cellulose, Gummis oder Kombinationen davon genannt.

Nachteilig an den bisher zum Einsatz kommenden geschäumten Polysaccharid-Klebstoffen ist, dass diesen komplexe Formulierungen zugrunde liegen, die Viskosität für die Verarbeitung an vielen Maschinen zu hoch ist und eine gegebenenfalls verwendete Stärke nur reversibel vernetzt ist, wobei eine solche reversible Vernetzung zumeist durch Verwendung von Borax erfolgt, welches giftig ist. Darüber hinaus ist der Vernetzungsgrad einer durch beispielsweise Verwendung von Borax reversibel vernetzten Stärke sehr stark pH-abhängig. Durch die Verwendung von nicht vernetzter Stärke (Dextrinen) ist auch ein rheologisch ungünstiges Verhalten an den Auftragsaggregaten zu befürchten.

Aufgabe der vorliegenden Erfindung ist es, diese Nachteile zu überwinden und eine Klebstoffzusammensetzung zur Verfügung zu stellen, welche einfach herzustellen ist, aufgeschäumt an schnellen Maschinen gut verarbeitbar ist und bei welcher der Vernetzungsgrad der verwendeten Stärke pHunabhängig ist.

Diese Aufgabe wird erfindungsgemäß dadurch gelöst, dass ein Polysaccharid-Klebstoff zur Verfügung gestellt wird, welcher kovalent vernetzte Stärke als Bindemittel zusammen mit einem Schaumerzeuger umfasst. Vorzugsweise wird die Konzentration der vernetzten Stärke im Polysaccharid-Klebstoff derart gewählt, dass eine wässrige, ungeschäumte Suspension des Klebstoffs eine Viskosität im Bereich von etwa 1000 bis 4000 mPas, vorzugsweise im Bereich von etwa 1500 bis 2500 mPas (Brookfieldviskosität, 25 °C, 100 UpM) aufweist. Besonders bevorzugt umfasst der erfindungsgemäße Polysaccharid-Klebstoff als vernetzte Stärke kaltwasserlösliche bzw. kaltwasserquellende, kovalent vernetzte Stärke(n) zusammen mit einem Schaumerzeuger. Unter kaltwasserlöslicher bzw. kaltwasserquellender kovalent vernetzter Stärke wird im vorliegenden Fall eine Stärke verstanden, welche kovalent vernetzt ist und bei Raumtemperatur in wässriger Lösung die Viskosität der Lösung ändert.

Dem erfindungsgemäßen Polysaccharid-Klebstoff wird vorzugsweise auch abgebaute Stärke zugemischt, wodurch der Feststoffgehalt der wässrigen, ungeschäumten Suspension des Klebstoffs erhöht wird, überraschender Weise ohne dass sich die Klebekraft eines aus dieser Suspension hergestellten Schaumklebers verringert. Dabei ist erfindungsgemäß bevorzugt, wenn nicht mehr als 70 Masse-% der vernetzten Stärke durch abgebaute Stärke ersetzt werden, vorzugsweise nicht mehr als 60 Masse-%, besonders bevorzugt nicht mehr als 40 Masse-%. Die abgebaute Stärke kann vorzugsweise ebenfalls kaltwasserlöslich bzw. kaltwasserquellend sein, wobei die Begriffe kaltwasserlöslich bzw. kaltwasserquellend ebenfalls wie zuvor angegeben definiert sind.

Gemäß einer weiteren bevorzugten Ausführungsform der vorliegenden Erfindung liegt der Feststoffgehalt einer wässrigen, ungeschäumten Suspension des erfindungsgemäßen Klebstoffs möglichst hoch, damit mit der Verklebung möglichst wenig Wasser in das zu vergebende System eingebracht wird. Bevorzugt wird, wenn der Feststoffgehalt der wässrigen, ungeschäumten Suspension des Klebstoffs mehr als 15 Masse-%, bevorzugter mehr als 20 Masse-% der Suspension beträgt, noch bevorzugter mehr als 30 Masse-%, besonders bevorzugt mehr als 35 Masse-%, insbesondere bevorzugt mehr als 40 Masse-%.

Eine bevorzugte Ausführungsform der vorliegenden Erfindung betrifft auch die Verwendung des erfindungsgemäßen Polysaccharid-Klebstoffs zur Herstellung eines Klebstoffschaums sowie ein Verfahren zur Herstellung eines Klebstoffschaums, wobei eine wässrige Suspension des erfindungsgemäßen Polysaccharid-Klebstoffs aufgeschäumt wird. Ein solcher Klebstoffschaum kann durch bekannte Techniken hergestellt werden, beispielsweise durch mechanische Mittel, wie z.B. mechanisches Rühren oder Schütteln und dem Einbringen von Gasen, oder durch chemische Mittel hergestellt werden. Hierbei werden Luft oder andere Gase in die verschäumbare wässrige Suspension des erfindungsgemäßen Polysaccharid-Klebstoffs unter Einbringung zusätzlicher Energie eingemischt, um einen stabilen, einheitlichen geschäumten Klebstoffschaum zu erzeugen. Vorzugsweise wird Luft verwendet, aber auch andere Gase wie Stickstoff, Kohlendioxid, Edelgase wie Helium und Neon sind möglich um den geschäumten Klebstoff zu erzeugen. Bevorzugt kann zur Herstellung des Klebstoffschaums ein Schaumgenerator der Marke Hansa (DE) verwendet werden.

Die Schaumdichte des hergestellten Klebstoffschaums beträgt vorzugsweise <0,9, <0,8, <0,7, <0,6, <0,5, <0,4 g/mL. Die Viskositäten der Klebstoffschäume betragen (gemessen mit Brookfield bei 100 UpM und 25 °C) 1000 bis 10000 mPas, bevorzugter 1500 bis 9000 mPas, mehr bevorzugt 2000 bis 8500 mPas, am bevorzugtesten 2500 bis 8000 mPas. Der so hergestellte Klebstoffschaum zeigte eine Klebkraft bei einem vollflächigen Auftrag von 60 µm auf ein Sackpapier (80 g/m²) von ≤ 125 s, vorzugsweise <110 s, bevorzugter <100 s, noch bevorzugter <80 s und am meisten bevorzugt <60 s. Die Ausgangsstärke für die erfindungsgemäß zum Einsatz kommende vernetzte Stärke kann jede herkömmliche Knollen-, Getreide- oder Leguminose-Stärke sein, z.B. Erbsenstärke, Maisstärke, inkl. Wachsmaisstärke, Kartoffelstärke, Amaranthstärke, Reisstärke, inkl. Wachsreisstärke, Weizenstärke, inkl. Wachsweizenstärke, Gerstenstärke, inkl. Wachsgerstenstärke, Tapiokastärke, Sagostärke.

Stärken natürlichen Ursprungs haben in der Regel einen Amylosegehalt von 20 Masse-% bis 30 Masse-%, abhängig von der Pflanzenart, aus der sie gewonnen werden. Es gibt aber auch amylopektinreiche Stärken, welche einen deutlich erhöhten Amylopektingehalt aufweisen, bzw. Produkte, welche einen erhöhten Amylosegehalt enthalten. Neben den natürlichen bzw. den durch Züchtungsmaßnahmen erhaltenen amylopektinreichen Stärketypen und Hochamylosetypen gibt es auch über chemische und/oder physikalische Fraktionierung gewonnene bzw. über gentechnisch veränderte Pflanzen hergestellte amylopektinreiche Stärken, die u.a. durch Unterdrückung der Amyloseproduktion erhalten werden. Bekannt sind amylopektinreiche Getreidestärken auf Basis von Maisstärke (Wachsmaisstärke), Reisstärke, Weizenstärke und Gerstenstärke. Neuerungen auf dem Gebiet der amylopektinreichen Stärken stellen amylopektinreiche Kartoffelstärke und amylopektinreiche Tapiokastärke dar.

Eine Vernetzung derartiger Ausgangsstärken zur Herstellung der erfindungsgemäß zum Einsatz kommenden vernetzten Stärken erfolgt vorzugsweise durch Umsetzung mit Epichlorhydrin, di- oder polyfunktionellen Glycidylethern bzw. -estern (Butandioldiglycidether, Polyglyceroltriglycidether, Cyclohexandimethanoldiglycidether, Glycerintriglycidether, Neopentylglycoldiglycidether, Pentaerythrittetraglycidether, Trimethylol-propantriglycidether, Perhydrobisphenoldiglycid-ether), Phosphoroxychlorid oder Trimetaphosphatsalzen (Natriumtrimetaphosphat). Weiters kann die Vernetzung beispielsweise mit Adipinsäure, Polyphosphaten, 1,3-Dichlor-2-propanol, gegebenenfalls im Gemisch mit (Poly-)Aminen, weiters mit Di- oder Polyepoxiden, zwei- oder mehrwertigen Isocyanaten, linearen Dicarboxylsäureanhydriden, Adipinsäure, Dichloressigsäure, Divinylsulfonen, Zitronensäureacrolein, Acroleinpolyphosphat z.B. Hexametaphosphat, Biphenylen, N,N,-Dimethylol-Imidzolidon-2 (DMEU), über eine Acetalvernetzung z.B. mit Formaldehyd, Dimethylolethylen-Harnstoff Aldehyden oder aldehydfreisetzenden Reagenzien, wie beispielsweise N,N'-Dimethylol-N,N'-ethylenharnstoff und gemischten Anhydriden von Carbonsäuren mit di- oder tribasischen Säuren, wie beispielsweise ein gemischtes Anhydrid aus Acetanhydrid mit Adipinsäure, erfolgen. Letzteres bzw. zahlreiche Varianten davon können unter dem Begriff Vernetzung mit Adipinsäure zusammengefasst werden. Als Vernetzungsreagenzien kommen auch noch weitere dem Fachmann bekannte Vernetzungsmittel in Frage, die angegebenen Reagenzien stellen nur eine Auswahl an möglichen Chemikalien dar.

Die Vernetzung der Ausgangsstärken kann gegebenenfalls auch im Extruder durch Reaktivextrusion erfolgen.

Kaltwasserlösliche bzw. kaltwasserquellende kovalent vernetzte Stärken können mit oder ohne Vorverkleisterung beispielsweise durch Walzentrocknung, Sprühtrocknung oder Extrusion hergestellt werden. Zur optimalen Entfaltung der Eigenschaften der kaltwasserlöslichen Stärke bzw. Stärkederivate ist der Aufschlussgrad wichtig. Je höher der Aufschlussgrad der erfindungsgemäß zum Einsatz kommenden kovalent vernetzten Stärke, desto bessere Eigenschaften hinsichtlich z.B. Klebkraft sind zu erwarten. Bevorzugt werden erfindungsgemäß komplett aufgeschlossene vernetzte Stärken verwendet, d.h. Stärken, welche beispielsweise unter den Polarisationsmikroskop oder im Polarisator keine oder nur wenige Polarisationskreuze zeigen oder auf einem Sieb nur wenig, d.h. kleiner 5 Masse % Rückstand hinterlassen. Dazu wird das Stärkeprodukt in entsprechender Konzentration (i.S.) bei 1500 UpM, 45 Minuten lang mit einem Zahnscheibenrührer in Wasser eingerührt. Für die Bestimmung des Siebrückstandes wird das Leergewicht eines Edelstahlsiebs (Ø ca. 80 mm, Maschenweite 250µm) bestimmt. Der fertig eingerührte Leim wird über das Sieb abgenutscht, mit Wasser wird nachgespült bis der Leim vollständig durch das Sieb gesaugt wurde. Das Sieb mit eventuellen Rückständen des Leims wird auf eine Petrischale aus Glas gelegt und im Trockenschrank bei 110 °C für mindestens 6 Stunden getrocknet. Durch Differenzwägung wird die genaue Menge des Rückstands bestimmt. Dieser Rückstand sollte max. 5% der eingesetzten Stärke betragen.

Die erfindungsgemäß eingesetzte kovalent vernetzte Stärke bzw. ihre Derivate zeigen beim Aufschluss und der nachfolgenden Verwendung im erfindungsgemäßen Polysaccharid-Klebstoff keine Klumpenbildung, Staubentwicklung und Entmischungsneigung und sind somit bei der praktischen Anwendung nach dem Einrühren in Wasser optimal verarbeitbar.

Weitere mögliche chemische Modifikationen der erfindungsgemäß verwendeten vernetzten Stärken bzw. kaltwasserlöslichen oder kaltwasserquellenden vernetzten Stärken sind z.B. Veretherungen oder Veresterungen. Sofern nichts anders Lautendes unten definiert ist, umfassen die Substituenten organische Reste mit bis zu 20, vorzugsweise bis zu 15, insbesondere bis zu 10, im Speziellen bis zu 6, Kohlenstoffatomen. Im Folgenden werden einige Derivatisierungen beschrieben, die alleine oder in Kombination miteinander zur weiteren Derivatisierung der Stärkederivate vorgesehen werden können. Die Art der Derivatisierung und die Rohstoffbasis der verwendeten Stärke (z.B. amylopektinreiche Kartoffel- oder amylopektinreiche Maisstärke) hängen sehr eng mit dem speziellen Einsatzbereich des jeweiligen Produktes zusammen. Die Methoden hiezu sind an sich bekannt. Im Speziellen sollen hier die Modifikation im Slurry und im Kleister genannt werden, auch Trockenderivatisierungen und Modifikation über Extrusionsverfahren sind möglich.

Aus der Literatur ist eine Vielzahl von Derivaten bekannt, deren Herstellung u.a. in dem Werk "Starch: Chemistry and Technology", R.L. Whistler, Kapitel X und XVII, 1984, und in "Modified Starches: Properties and Uses", herausgegeben von O.B. Wurzburg, Kapitel 2-6, und 9-11, CRC Press, 1986, gut zusammengefasst ist. Im Allgemeinen unterscheidet man bei Stärkederivaten zwischen Stärkeether und Stärkeester. Des Weiteren kann zwischen nichtionischen, anionischen, kationischen und amphoteren als auch hydrophoben Stärkederivaten differenziert werden, welche sowohl über eine Slurry-, Kleister-, Halbtrocken- oder Trockenderivatisierung als auch über eine Derivatisierung in organischen Lösungsmitteln hergestellt werden können.

Unter anionischer und nichtionischer Modifizierung der Stärke werden jene Derivate zusammengefasst, bei denen die freien Hydroxylgruppen der Stärke durch anionische oder nichtinonische Gruppierungen substituiert werden.

Die anionische und nichtionische Derivatisierung lässt sich prinzipiell auf zwei Arten durchführen:
a) Die Modifizierung erfolgt dermaßen, dass es zu einer Veresterung der Stärke kommt. Als Modifizierungsmittel dienen anorganische oder organische verschiedenwertige, meist zweiwertige, Säuren bzw. Salze davon bzw. Ester davon bzw. Anhydride davon. So sind u.a. folgende Säuren (ihre Aufzählung ist nur beispielhaft) geeignet: o-Phosphorsäure, m-Phosphorsäure, Poly-Phosphorsäure, unterschiedlichste Schwefelsäuren, verschiedenste Kieselsäuren, die unterschiedlichsten Borsäuren, Essigsäure, Oxalsäure, Bernsteinsäure und ihre Derivate, Glutarsäure, Adipinsäure, Phthalsäure, Citronensäure, etc.. Auch gemischte Ester oder Anhydride können verwendet werden. Bei der Veresterung der Stärke kann diese auch mehrfach erfolgen, so dass beispielsweise Distärkephosphorsäureester hergestellt werden können. Vorzugsweise ist die erfindungsgemäß eingesetzte Stärke dabei das Produkt einer Veresterung mit Mono-, Di- oder Tricarbonsäuren mit einer Alkylkette mit 1 bis 30 Kohlenstoffatomen oder ein Carbamat, besonders bevorzugt acyliert, wie succinyliert, octenylsuccinyliert, dodecylsuccinyliert oder acetyliert.
b) Die Modifizierung erfolgt dermaßen, dass es zu einer Veretherung der Stärke kommt. Besonders bevorzugt wird dabei, wenn die erfindungsgemäß eingesetzte Stärke eine Methyl-, Ethyl-, Hydroxyethyl-, Hydroxypropyl-, Hydroxybutyl-, Carboxymethyl-, Cyanoethyl-, Carbamoylethyl-etherstärke oder ein Gemisch derselben ist.

Die Stärke ist dadurch beispielsweise primär, oder zusätzlich mit Phosphat, Phosphonat, Sulfat, Sulfonat oder Carboxylgruppen substituiert. Dies wird beispielsweise durch Umsetzung der Stärke mit Halogencarbonsäuren, Chlorhydroxyalkylsulfonaten oder Chlorhydroxyalkylphosphonaten erreicht.

Unter kationischer Modifizierung der Stärken werden jene Derivate zusammengefasst, wo durch Substitution eine positive Ladung in die Stärke eingebracht wird. Die Kationisierungsverfahren erfolgen mit Amino-, Imino-, Ammonium-, Sulfonium- oder Phosphoniumgruppen. Methoden zur Herstellung von kationisierten Stärken sind beispielsweise von D.B. Solareck: Cationic Starches, in dem Buch von O.B. Wurzburg (Hrsg.): Modified Starches: Properties and Uses, CRC Press Inc., Boca Raton, Florida (1986), S. 113-130, beschrieben. Solche kationischen Derivate enthalten bevorzugt stickstoffhaltige Gruppen, insbesondere primäre, sekundäre, tertiäre und quartäre Amine bzw. Sulfonium- und Phosphoniumgruppen, die über Ether- oder Esterbindungen gebunden sind. Bevorzugt ist der Einsatz von kationisierten Stärken, die tertiäre und elektropositiv geladene quaternäre Ammoniumgruppen enthalten.

Eine weitere Gruppe stellen die amphoteren Stärken dar. Diese enthalten sowohl anionische als auch kationische Gruppen, wodurch ihre Anwendungsmöglichkeiten sehr spezifisch sind. Meist handelt es sich um kationische Stärken, die entweder durch Phosphatgruppen, Carboxymethylgruppen oder durch Xanthate zusätzlich modifiziert werden. Eine Darstellung zur Herstellung solcher Produkte ist ebenfalls von D.B. Solareck: Cationic Starches, in dem Buch von O.B. Wurzburg (Hrsg.): Modified Starches: Properties and Uses, CRC Press Inc., Boca Raton, Florida (1986), S. 113-130, beschrieben.

Bei den Estern unterscheidet man zwischen einfachen Stärkeestern und gemischten Stärkeestern, wobei der (die) Substituent(en) des Esters verschiedenartig sein kann (können): im Esterrest RCOO- kann der Rest R ein Alkyl-, Aryl-, Alkenyl-, Alkaryl- oder Aralkylrest mit 1 bis 20 Kohlenstoffatomen, vorzugsweise 1 bis 17 Kohlenstoffatomen, bevorzugt mit 1 bis 6 Kohlenstoffatomen, sein. Diese Produkte schließen die Derivate Acetat (hergestellt aus Vinylacetat oder Acetanhydrid), Propionat, Butyrat, Stearat, Phthalat, Succinat, Oleat, Maleinat, Fumarat und Benzoat ein.

Veretherungen erfolgen großteils durch Umsetzung mit Alkylenoxiden (Hydroxyalkylierung), die 1 bis 20 Kohlenstoffatome, vorzugsweise 2 bis 6 Kohlenstoffatome, insbesondere 2 bis 4 Kohlenstoffatome, enthalten, insbesondere durch Verwendung von Ethylen- und Propylenoxid. Es können aber auch Methyl-, Carboxymethyl-, Cyanethyl- und Carbamoylether hergestellt und verwendet werden. Als Beispiel für eine Carboxyalkylierung sei die Reaktion von Stärke mit Monochloressigsäure oder deren Salzen angeführt. Weiters seien speziell noch hydrophobierende Veretherungsreagenzien, wie Glycidylether oder Epoxide, genannt. Die Alkylkettenlänge der genannten Reagenzien liegt zwischen 1-20 Kohlenstoffatomen, darüber hinaus sind auch noch aromatische Glycidylether möglich.

Als Beispiel für eine Derivatisierung mit Glycidylethern seien o-Kresol-glycidether, Polypropylendiglykolglycidether, tert-Butylphenylglycidether, Ethylhexyl-glycidether, Hexandiolglycidether und Neodekansäure-glycidester genannt.

Eine weitere Möglichkeit der Alkylierung besteht in der Alkylierung über Alkylhalogenide, beispielsweise über Methylchlorid, Dialkylcarbonate, z.B. Dimethylcarbonat (DMC) oder Dialkylsulfat z.B. Dimethylsulfat.

Der Substituierungsgrad MS (molare Substitution: mol Substituent/mol Glukose-Einheit) ist vorzugsweise mindestens 0,0001, 0,001, 0,01, 0,02, 0,03, 0,04, oder mindestens 0,05, 0,06, 0,07, 0,08, oder 0,09, am meisten bevorzugt mindestens 0,1, und bis zu 3,0, 2,0, 1,0, 0,8, 0,75, 0,7 oder bis zu 0,6. Der Substitutionsgrad DS (degree of substitution: mol Substituent (direkt an Glukose-Einheit gebunden)/mol Glukose-Einheit) liegt vorzugsweise zwischen 0,001 und 3,0, bevorzugt zwischen 0,05 und 0,5.

Die für die Veresterungen, Veretherungen und Vernetzungen verwendeten und auch die chemisch nichtmodifizierten Stärken können zudem über thermisch-physikalische Modifikationen getempert (im Slurry) oder inhibiert (Trocken- bzw. Halbtrockenreaktion) sein.

Stärken können auch über Hydrophobierungsreagenzien modifiziert werden. Veretherte hydrophobe Stärken erhält man dabei, wenn die hydrophoben Reagenzien als funktionelle Gruppe ein Halogenid, ein Epoxid, ein Glycidyl, ein Halogenhydrin, eine Carbonsäure oder eine quaternäre Ammoniumgruppe enthalten. Für veresterte hydrophobe Stärken enthält das hydrophobe Reagens zumeist ein Anhydrid. Die angeführten Reaktionen können dabei auch unter Anwesenheit eines Tensides ablaufen. Eine Hydrophobierung der Stärke kann auch über eine Abmischung einer Stärke oder eines Stärkederivates mit Fettsäureester erfolgen. Erfindungsgemäß ist das Stärkederivat hydrophobiert, insbesondere mit einem Derivatisierungsgrad der Hydrophobierung wie oben zur Substituierung angegeben, vorzugsweise zwischen MS von 0,01 bis 0,1. All die genannten Modifikationen der Stärke können nicht nur durch Umsetzung nativer Stärke erzielt werden, auch abgebaute Formen können zum Einsatz kommen. Die Abbauvorgänge können auf mechanische, thermische, thermochemische oder enzymatische Weise erfolgen. Dadurch lässt sich die Stärke nicht nur strukturell verändern, die Stärkeprodukte können auch kaltwasserlöslich bzw. kaltwasserquellbar gemacht werden (z.B. Dextrinierung und Extrusion).

Schließlich kann die Stärke auch als Pfropf-Polymer oder als Pfropf-Copolymer vorliegen, wie beispielsweise mit Produkten aus der Gruppe der Polyvinylalkohole, Acrylamide oder Monomere bzw. Polymere ausgehend von Kohlenwasserstoffen. Dabei kann das Starke-Pfropf-(Co)-Polymerisat bevorzugt als Emulsionspolymerisat vorliegen.

Wie bereits zuvor erwähnt kann der erfindungsgemäße Polysaccharid-Kleber zur Erhöhung des Feststoffgehalts als zweite Stärkekomponente eine abgebaute, vorzugsweise stark abgebaute Stärke zugesetzt werden, welche vorzugsweise kaltwasserlöslich bzw. kaltwasserquellend ist. Hierfür kommen oxidativ, sauer und thermomechanisch abgebaute Stärken, vorzugsweise Dextrine, Maltodextrine und enzymatisch modifizierte Stärken sowie Kombinationen der erwähnten Produkte in Frage. Die abgebaute Stärke weist vorzugsweise eine hohe Wasserlöslichkeit auf, insbesondere sind mindestens 75 Masse-%, in besonderen Ausführungsformen mindestens 85 Masse-%, speziell bevorzugt mindestens 95 Masse-% der Stärke bei 25°C wasserlöslich.

Dextrine sind (stark) abgebaute bzw. hydrolytisch gespaltene Stärkeprodukte. Bei der Bildung von Dextrinen wird durch Hitze und Säurebehandlung Stärke in kleine polymere Fragmente gespalten, welche gegebenenfalls zu einem hochverzweigten Polymer mit mittlerer Größe repolymerisieren können. Je nach unterschiedlicher Säure- und Hitzebehandlung werden Weißdextrine und Gelbdextrine unterschieden.

Maltodextrine entstehen durch den enzymatischen Abbau von Stärke mit Amylasen. Je nach Amylase-Typ werden unterschiedliche Produkte erhalten. Durch die hydrolytische Spaltung der Stärke in kleinere Fragmente erhöht sich der Anteil an reduzierenden Enden und somit der DE-Wert. Im Gegensatz zur Stärke sind Dextrine üblicherweise in Wasser löslich. Dennoch kann auch bei Dextrinen eine Retrogradation bei längerer flüssiger Aufbewahrung auftreten, das ist insbesondere bei hohen Konzentrationen der Fall.

Unter enzymatisch modifizierte Stärke versteht man eine mit einem Verzweigungsenzym behandelte Stärke, welche sich durch einen hohen Verzweigungsgrad (4-12 Masse-%), einer engen Molmassenverteilung (PDI = 1- 5) und niedrigen DE Wert (< 1) auszeichnet.

Die erfindungsgemäß zum Einsatz kommenden Schaumerzeuger umfassen oberflächenaktive Substanzen, insbesondere ausgewählt aus der Gruppe umfassend anionische, kationische, amphotere oder nichtionische Tenside sowie Mischungen hiervon.

Typische Beispiele für anionische Tenside sind Seifen, Alkylbenzolsulfonate, Alkansulfonate, Olefinsulfonate, Alkylethersulfonate, Glycerinethersulfonate, a-Methylestersulfonate, Sulfofettsäuren, Alkylsulfate, Fettalkoholethersulfate, Glycerinethersulfate, Hydroxymischether Sulfate, Monoglycerid(ether)sulfate, Fettsäureamid(ether)sulfate, Mono- und Dialkylsulfosuccinate, Mono- und Dialkyl Sulfosuccinate, Sulfotriglyceride, Amidseifen, Amid Ethercarbonsäuren und deren Salze, Fettsäureisothionate, Fettsäuresarcosinate, Fettsäuretauride, N-Acylaminosäuren wie beispielsweise Acyllactylate, Acyltartrate, Acylglutamate, Acylaspartate, Alkyloligoglucosidsulfate, Proteinfettsäurekondensate und Alkyl(ether)phosphate.

Typische Beispiele für kationische Tenside sind quartäre Ammoniumsalze und die quaternisierten Derivate von Polyalkanolamin Ester sowie quaternäre Alkylphosphoniumsalze.

Beispiele für amphotere Tenside sind Alkylaminoxide, Alkylbetaine, Alkylsulfobetaine (Sultaine), Amidoalkylbetaine, Alkylglycinate, Alkylcarboxyglycinate, Alkylamphoacetaten, Alkylamphopropionate, Alkylamphoglycinate, Alkylamidopropylbetaine, Alkylamidopropyl- und hydroxysultaine. Besonders bevorzugte amphotere Tenside sind Alkylaminoxide, Alkylsulfobetaine (Sultaine), Alkylamphoglycinate Alkylamphoacetaten wie Natrium coco monoamphoacetate, oder Natrium coco diamphoacetate und Alkylamidopropylbetaine wie Cocoamidopropylbetain.

Spezifische Beispiele für nichtionische Tenside sind alkoxyliertes Trimethyolol Propan, alkoxyliertes 1,2,3-Trihydroxy-Hexan, alkoxyliertes Pentaetrythritol alkoxyliertes Sorbit, alkoxylierte Glycerinfettsäureester, alkoxylierte Trimethyolol Propan-Fettsäureester, alkoxylierte 1,2,3-Trihydroxy-Hexan-Fettsäureester, alkoxylierte Pentaetrythritol-Fettsäureester, alkoxylierte Sorbit-Fettsäureester, Fettalkoholpolyglycolether, Alkylphenolpolyglycolether, Fettsäurepolyglycolester, Fettsäureamid-polyglykolether, Fettaminpolyglycolether, gegebenenfalls partiell oxidierte Alk(en)yloligoglykoside bzw. Glucoronsäurederivate, Fettsäure-N-alkylglucamide, Proteinhydrolysate, Polyolfettsäureester, Zuckerester, Alkylpolyglucoside, Sorbitanester, Polysorbate und Alkanolamide, einschließlich alkoxylierte Alkanolamide und Alkylethercarbonsäure Alkanolamide, sowie Blockcopolymere von Propylenoxid mit Ethylenoxid und Mischungen davon.

Der in der vorliegenden Erfindung zum Einsatz kommende Schaumerzeuger wird vorzugsweise in einer Menge von 0,05 bis 20 Masse-% und vorzugsweise bei 0,2 bis 5 Masse-%, bezogen auf die wässrige, ungeschäumte Suspension des Klebstoffs, eingesetzt.

Die erfindungsgemäßen Polysaccharid-Klebstoffe können weiters übliche Zusatz- oder Füllstoffe, Additive, Salze, Pufferkomponenten oder Biozide umfassen. Solche Additive oder Füllstoffe können insbesondere zur Feinjustierung der Viskosität, des Feststoffgehalts, der Stabilität, der Klebefestigkeit, der Rheologie, der Trocknungsrate, der Flexibilität sowie von Wasser- und Pilzresistenz eingesetzt werden.
a) Füllstoffe: Kaolin, Silikate, Calciumcarbonat, Kreide, Talkum, Magnesiumcarbonat, Microsilica, Fasern und dergleichen,
b) Rheologie modifizierende Additive: beeinflussen die Scherverdünnung bzw. Scherverdickung sowie die Schaumstabilität: anorganische Kolloide (Schichtsilikate, Bentonite Montmorillonite, Kaoline,...), Assoziative Rheologieadditive (Polyurethane, Polyetherpolyole, Polyacrylate...), Alkali Swellable Acrylate, Peptide und Proteine, Silikate, Harnstoff, Xanthan, Kasein, Alginat, Celluloseether, Carrageen, Guar, Hydrokolloide, Wasserglas, und dergleichen,
c) Dispergiermittel: Polyacrylate, hydrophobierte Polyacrylate und dergleichen,
d) Konservierungsmittel (Fungizide, Biozide, Bakterozide): BIT, MIT, CIT, Sorbate und dergleichen,
e) Feuchtigkeit regulierende Produkte bzw. Weichmacher: Natriumnitrat, Harnstoff, Zucker, Zuckeralkohole, Glukose, Sorbitol, mehrwertige Alkohole (Glykole,und dergleichen,), Calciumchlorid, Zinkchlorid und dergleichen,
f) Farbstoffe, Pigmente: Titandioxid und dergleichen,
g) Antistatische Zusatzmittel,
h) Tackifier: Acrylat, Dextrin, Harze und dergleichen,
i) Vernetzer: Borsäure (Borax), Zirkoniumsalze, Natriumaluminate und dergleichen,
j) Netzmittel und Tenside,
k) Polyvinylacetat, Polyvinylalkohol, Dispersionspulver und dergleichen,
l) Nassfestmittel: Formaldehydharze, Epichlorhydrinharze, Polyimine und dergleichen, sowie
m) Weiters: Wasserglas, Wachse, Salze, Antioxodantien, Aromastoffe Entschäumer und andere Additive, welche hier typischer Weise eingesetzt werden.

Eine weitere bevorzugte Ausführungsform der vorliegenden Erfindung betrifft die Verwendung von kovalent vernetzter Stärke als Bindemittel in einem Polysaccharid-Klebstoff wie zuvor beschrieben sowie die Verwendung von kovalent vernetzte Stärke als Bindemittel zusammen mit einem Schaumerzeuger in einem Klebstoffschaum.

Die vorliegende Erfindung wird nun anhand der nachfolgenden Beispiele näher definiert, auf welche sie jedoch nicht beschränkt sein soll.

### Verwendete Abkürzungen bzw. Materialien:

### VKS: kovalent vernetzte kaltquellende Stärke

### AS: Abgebaute Stärke

**Tabelle 1: Beschreibung der verwendeten Stärkeprodukte**

| | |
|---|---|
| VKS 1 | Vernetzte kaltquellende Kartoffelstärke (Solvicol GP45+, AVEBE) |
| VKS 2 | Vernetzte kaltquellende Maisstärke (Tackidex O36SP, Roquette) |
| VKS 3 | Vernetzte extrudierte Maisstärke, niedriger Vernetzungsgrad (hergestellt wie nachfolgend angegeben) |
| VKS 4 | Vernetzte extrudierte Maisstärke, höherer Vernetzungsgrad (hergestellt wie nachfolgend angegeben) |
| VKS 5 | Vernetzte extrudierte Kartoffelstärke (hergestellt wie nachfolgend angegeben) |
| | |
| AS 1 | Maltodextrin DE6 (Agenamalt 20.226, AGRANA) |
| AS 2 | Gelbdextrin (Dextrin 20.921, AGRANA) |
| AS 3 | OSA modifiziertes Dextrin (Mira CAP, Tate&Lyle) |

### Herstellung der Klebstoffschäume:

Die Herstellung der Leime erfolgte durch Einscheren der Stärken in definierten Konzentrationen mit einem Dissolver für 45 min bei 1500 UpM in Wasser. Die Konzentration der Leime lag dabei zwischen 15 und 43 Masse-%. Anschließend wurden den Leimen 2 Masse-% Schaumerzeuger (Simulsol SL 826 von Seppic als nichtionisches Tensid bzw. Hostapur OS von Clariant als anionisches Tensid) zugesetzt und die Leime wurden mit einem Handmixer für 2 Minuten auf Stufe 5 aufgeschäumt. Alternativ dazu lag der Schaumerzeuger zusammen mit der(den) Stärke(n) als Premix vor, welcher Premix dann in das Wasser eingeschert und anschließend aufgeschäumt wurde.

Von den aufgeschäumten Klebstoffen wurden die Schaumdichte, die Brookfieldviskosität (bis max. 10000 mPas) und die Klebkraft (bis max. 180 s) bestimmt.

### Bestimmung der Viskosität

Der nach oben beschriebener Methode hergestellte Schaum kann direkt zur Bestimmung der Viskosität herangezogen werden. Diese wurde mit Hilfe eines Brookfield-RV Viskosimeters (DVII+ Viscosimeter) bei Raumtemperatur und einer Umdrehungszahl von 100 UpM mit der Spindel 4 oder 5 bestimmt. Die Messungen fanden direkt nach der Herstellung des Klebstoffschaumes statt. Oberhalb von Messwerten von 10000 mPas wurden die Viskositäten nicht mehr bestimmt. Der optimale Bereich liegt zwischen 2500 und 8000 mPas.

### Bestimmung der Klebkraft

Eine Handrakel wird mit der Schichtdicke von 60 µm auf die Außenseite eines Sackpapiers (SE BL 90g/m²) gelegt, mit Klebstoffschaum (Herstellung siehe oben) befüllt und über das Papier gezogen. Nun wird ein zweiter Papierstreifen mit der Papierinnenseite darauf gelegt. Das zusammengelegte Papier wird mit der flachen Hand abgestreift und nochmals auf der Rückseite in gleicher Weise abgestreift. Der verklebte Papierstreifen wird nun langsam Stück für Stück von Hand auseinander gezogen (leicht ruckartig), bis ein vollständiger Faserriss (über die gesamte Verklebungsbreite) festgestellt wird. Dieser Zeitpunkt stellt die Verklebungsgeschwindigkeit dar und wird in Sekunden angegeben, wobei ein Mittelwert von zumindest 3 Messungen gebildet wird. Wenn nach 180 sec. noch keine Verklebung festgestellt werden konnte, wurde die Messung abgebrochen. Ein sehr guter Wert liegt bei < 80 s, der optimale Bereich liegt bei Klebkräften < 60 s.

### Bestimmung der Schaumdichten

Genau 20 mL des Schaumes wurden in eine tarierte Mensur gefüllt und das Gewicht notiert. Daraus wurde die Schaumdichte in g/mL errechnet. Gute Schaumdichten liegen unter 0,6 g/mL (Halbierung der Dichte).

### Herstellung der kovalent vernetzten kaltquellenden Stärken:

14,8 kg Wasser werden in einem 100 L Behälter vorgelegt und 11,5 kg Stärke (Maisita 21.000 oder Stärkina 20.000, AGRANA Österreich; 10 kg auf Substanz) suspendiert. Der Slurry wird mit 2%iger NaOH (Donau Chemie, Österreich) auf pH 11,3 gestellt. Danach wird der Slurry in einen Reaktor überführt und auf 35°C erwärmt. Für VKS 3 wurden 44 g Epichlorhydrin, für VKS 4 werden 88 g Epichlorhydrin (Sigma, Deutschland) und für VKS 5 64 g Phosphoroxychlorid (Sigma, Deutschland) zugegeben. Nach 16 Stunden (VKS 3 und VKS 4) bzw. 1 Stunden (VKS 5) Reaktionszeit wird der Slurry zentrifugiert, mit 150 l Wasser gewaschen und mit einem Spin-Flash Trockner (Anhydro A/S, Fa. Anhydro, Dänemark) getrocknet. Die getrocknete Stärke wurde anschließend mit einem Doppelschneckenextruder (TSK-30/28D, Theysohn, Deutschland) extrudiert.

### Ergebnisse:

### Versuche mit kovalent vernetzten und abgebauten Stärken:

In Tabelle 2 sind die Versuche zum Aufschäumen der reinen kovalent vernetzten, kaltquellenden Stärken sowie der reinen abgebauten Stärken dargestellt. Neben dem Standardschaumerzeuger Simulsol SL826 wurde auch der Schaumerzeuger Hostapur OS flüssig verwendet. Die Konzentrationen der vernetzten Stärken wurden so gewählt, dass die ungeschäumten Leime eine Viskosität im Bereich von etwa 1500 bis 2500 mPas (Brookfieldviskosität, 25 °C, 100 UpM) hatten.

**Tabelle 2: Ergebnisse der Untersuchung der Klebstoffschäume**

| Stärkebasis | Schaumerzeuger | Konzentration [%] | Viskosität [mPas] | Schaumdichte [g/mL] | Klebkraft [s] |
|---|---|---|---|---|---|
| VKS 1 | Simulsol | 20 | 4200 | 0,4 | 40 |
| VKS 1 | Hostapur | 20 | 7510 | 0,5 | 39 |
| VKS 2 | Simulsol | 27 | 5070 | 0,5 | 45 |
| VKS 3 | Simulsol | 25 | 3690 | 0,4 | 125 |
| VKS 4 | Hostapur | 20 | 1488 | 0,4 | 56 |
| VKS 5 | Simulsol | 17 | 6160 | 0,5 | 64 |
| VKS 5 | Hostapur | 15 | 7420 | 0,6 | 48 |
| AS 1 | Simulsol | 43 | 5840 | 0,4 | > 180 |
| AS 2 | Simulsol | 43 | 3410 | 0,3 | > 180 |

Die Schaumdichten der Klebstoffschäume lagen in einem Bereich von 0,3- 0,5 g/mL, entsprechend einer Reduktion der Dichte der Klebstoffe um mindestens die Hälfte. Die Klebkräfte der Stärken VKS 1, 2 und 5 waren sehr gut, VKS 3 zeigte im geschäumten Zustand eine noch annehmbare Klebkraft, die abgebauten Stärken AS 1 und AS 2 zeigten keine Klebkraft.

### Versuche mit Mischungen VKS und AS:

Um möglichst wenig Wasser in das System einzubringen soll der Feststoffgehalt der Leime möglichst hoch liegen. Dies kann durch die Zumischung von abgebauter Stärke erreicht werden. In Tabelle 3 sind die Mischungen der vernetzten Stärke VKS 3 mit der abgebauten Stärke AS 1 dargestellt. Mit zunehmender Menge an vernetzter Stärke stieg die Viskosität, ab einer Zugabemenge von 60 Masse-% vernetzter Stärke war diese nicht mehr messbar. Die Dichte der Klebstoffe konnte durch das Aufschäumen deutlich reduziert werden, ab einem Zusatz von 40 Masse-% VKS 5 wurden gute Klebkräfte gefunden. Auch mit dem Schaumerzeuger Hostapur konnten gute Schaumdichten und Klebkräfte erreicht werden. Mit dem Röstdextrin AS 2 zeigte der Schaum eine etwas höhere Viskosität und einen etwas langsameren Tack (vergleiche Tabelle 4).

**Tabelle 3: Ergebnisse der Klebstoffschäume mit Mischungen mit VKS 5 und AS 1 bei 35 Masse-% FSG**

| Anteil VKS 5 [%] | Schaumerzeuger | Viskosität [mPas] | Schaumdichte [g/mL] | Klebkraft [s] |
|---|---|---|---|---|
| 10 | Simulsol | 2332 | 0,3 | > 180 |
| 20 | Simulsol | 2848 | 0,3 | > 180 |
| 30 | Simulsol | 3790 | 0,4 | > 180 |
| 40 | Simulsol | 6120 | 0,4 | 50 |
| 50 | Simulsol | 6920 | 0,4 | 47 |
| 60 | Simulsol | > 10000 | 0,5 | 35 |
| 30 | Hostapur | 3480 | 0,4 | 52 |
| 40 | Hostapur | 4840 | 0,5 | 36 |

**Tabelle 4: Ergebnisse der Klebstoffschäume mit Mischungen mit VKS 5 und AS 2 bei 35 Masse-% FSG**

| Anteil VKS 5 [%] | Schaumerzeuger | Viskosität [mPas] | Schaumdichte [g/mL] | Klebkraft [s] |
|---|---|---|---|---|
| 50 | Hostapur | 7800 | 0,6 | 80 |

Ein ähnliches Bild zeigte sich auch bei den Mischungen der vernetzten Stärke VKS 4 mit AS 1. Ab einer Zugabe von 30 Masse-% vernetzte, extrudierte Stärke VKS 4 konnten gute Viskositäten und Klebkräfte bei einem FSG von 35 Masse-% bestimmt werden. Auch mit dem Schaumerzeuger Hostapur zeigten sie Klebstoffschäume gute Eigenschaften.

**Tabelle 5: Ergebnisse der Klebstoffschäume mit Mischungen von VKS 4 und AS 1 bei 35 Masse-% FSG**

| Anteil VKS 4 [%] | Schaumerzeuger | Viskosität [mPas] | Schaumdichte [g/mL] | Klebkraft [s] |
|---|---|---|---|---|
| 10 | Simulsol | 3476 | 0,3 | > 180 |
| 20 | Simulsol | 2300 | 0,3 | > 180 |
| 30 | Simulsol | 1600 | 0,5 | 68 |
| 40 | Simulsol | 2756 | 0,5 | 66 |
| 50 | Simulsol | 3145 | 0,6 | 64 |
| 60 | Simulsol | 6460 | 0,6 | 73 |
| 40 | Hostapur | 2000 | 0,5 | 52 |
| 50 | Hostapur | 2960 | 0,5 | 51 |

**Tabelle 6: Ergebnisse der Klebstoffschäume mit Mischungen von VKS 4 und AS 1 bei 43 Masse-% FSG**

| Anteil VKS 4 [%] | Schaumerzeuger | Viskosität [mPas] | Schaumdichte [g/mL] | Klebkraft [s] |
|---|---|---|---|---|
| 10 | Simulsol | 2580 | 0,6 | 39 |
| 20 | Simulsol | 2136 | 0,6 | 57 |
| 30 | Simulsol | 2256 | 0,5 | 47 |
| 40 | Simulsol | 4000 | 0,8 | 39 |
| 50 | Simulsol | 8840 | 0,9 | 49 |
| 60 | Simulsol | > 10000 | 1,0 | 45 |

Um die Konzentration der Leime noch weiter zu erhöhen war es notwendig, eine andere vernetzte Stärke, VKS 3, einzusetzen. Wie in Tabelle 7 dargestellt, konnten Konzentrationen von 43 Masse-% realisiert werden. Die Mischung aus VKS 3 und AS 1 zeigten ab einem Anteil von 30 Masse-% vernetzter Stärke stark verbesserte Klebkräfte bei guten Schaumviskositäten.

**Tabelle 7: Ergebnisse der Klebstoffschäume mit Mischungen von VKS 3 und AS 1 bei 43 Masse-% FSG**

| Anteil VKS 3 [%] | Schaumerzeuger | Viskosität [mPas] | Schaumdichte [g/mL] | Klebkraft [s] |
|---|---|---|---|---|
| 10 | Simulsol | 5230 | 0,5 | > 180 |
| 20 | Simulsol | 5480 | 0,4 | > 180 |
| 30 | Simulsol | 5750 | 0,5 | 32 |
| 40 | Simulsol | 6380 | 0,5 | 31 |
| 50 | Simulsol | 7350 | 0,4 | 39 |
| 60 | Simulsol | 9530 | 0,5 | 42 |
| 20 | Hostapur | 2540 | 0,6 | 35 |
| 40 | Hostapur | 1364 | 0,7 | 42 |
| 60 | Hostapur | 7670 | 0,9 | 29 |

### Vergleichsversuche:

Klebstoffschäume auf Basis von Röstdextrinen wurden bereits in der WO 2002/00804 und den Patenten US 6,280,514 B1 und US 6,280,515 B1 beschrieben. In der Tabelle 8 sind die Eigenschaften dieser Klebstoffschäume dargestellt. Die Mischungen A und C aus dem Patent US 6,280,514 B1 zeigten deutlich höherviskose Schäume, die in der Praxis nicht verarbeitet sind. Die Mischung A ließ sich zudem nicht gut aufschäumen. Weiters enthalten die Mischungen Borax, welches als toxisch eingestuft wurde und lediglich eine reversibel Vernetzung der verwendeten Stärke bzw. Stärkeprodukte vorsieht. Wenn Borax aus der Rezeptur entfernt wird, werden zwar niedrigere Viskositäten erreicht, allerdings andererseits auch keine Verklebung.

Die Mischungen A-C des Patentes US 6,280,515 B1 zeigten keine ausreichende Klebkraft, zudem konnten sowohl Mischung A als auch Mischung C nicht aufgeschäumt werden.

**Tabelle 8: Ergebnisse der Vergleichsversuche**

| | | Stärkebasis | Konzentration [%] | Viskosität [mPas] | Schaumdichte [g/mL] | Klebkraft [s] |
|---|---|---|---|---|---|---|
| WO 02/00804 | Leim A | AS 2 | 63 | > 10000 | 1,0 | 59 |
| WO 02/00804 | Leim C | AS 3 | 63 | > 10000 | 0,6 | 45 |
| WO 02/00804 | Leim A* | AS 2 | 61 | 2300 | 0,9 | > 180 |
| WO 02/00804 | Leim C* | AS 3 | 55 | 1440 | 0,5 | > 180 |
| WO 02/00804 | Leim A | AS 2 | 33 | 78 | 1,0 | > 180 |
| US 6,280,515 B1 | Leim B | AS 3 | 33 | 1400 | 0,3 | > 180 |
| US 6,280,515 B1 | Leim C | AS 2 / AS 3 | 33 | 173 | 1,0 | > 180 |

| | | | | | | |
|---|---|---|---|---|---|---|
| * Rezeptur ohne Borax | | | | | | |

## Patentansprüche

1. Polysaccharid-Klebstoff enthaltend kovalent vernetzte Stärke als Bindemittel zusammen mit einem Schaumerzeuger.

2. Polysaccharid-Klebstoff nach Anspruch 1, **dadurch gekennzeichnet, dass** die Konzentration der kovalent vernetzten Stärke in Polysaccharid-Klebstoff derart gewählt ist, dass eine wässrige, ungeschäumte Suspension des Klebstoffs eine Viskosität im Bereich von etwa 1000 bis 4000 mPas, vorzugsweise im Bereich von etwa 1500 bis 2500 mPas (Brookfieldviskosität, 25 °C, 100 UpM) aufweist.

3. Polysaccharid-Klebstoff nach Anspruch 1 oder 2, **dadurch gekennzeichnet, dass** die kovalent vernetzte Stärke eine kaltwasserlösliche bzw. kaltwasserquellende kovalent vernetzte Stärke ist

4. Polysaccharid-Klebstoff nach einem der Ansprüche 1 bis 3, **dadurch gekennzeichnet, dass** nicht mehr als 70 Masse-% der vernetzten Stärke durch abgebaute Stärke ersetzt werden, vorzugsweise nicht mehr als 60 Masse-%, besonders bevorzugt nicht mehr als 40 Masse-%.

5. Polysaccharid-Klebstoff nach einem der Ansprüche 1 bis 4, **dadurch gekennzeichnet, dass** die abgebaute Stärke kaltwasserlöslich bzw. kaltwasserquellend ist.

6. Polysaccharid Klebstoff nach Anspruch 4 oder 5, **dadurch gekennzeichnet, dass** die abgebaute Stärke ausgewählt ist aus der Gruppe umfassend Dextrine, Maltodextrine und enzymatisch modifizierte Stärken sowie Kombinationen hiervon.

7. Polysaccharid-Klebstoff nach einem der Ansprüche 1 bis 6, **dadurch gekennzeichnet, dass** der Schaumerzeuger ausgewählt ist aus der Gruppe umfassend anionische, kationische, amphotere oder nichtionische Tenside sowie Mischungen hiervon.

8. Wässrige Suspension enthaltend einen Polysaccharid-Klebstoff nach einem der Ansprüche 1 bis 7, **dadurch gekennzeichnet, dass** der Feststoffgehalt der wässrigen, ungeschäumten Suspension mehr als 15 Masse-%, 20 Masse-% der Suspension beträgt, noch bevorzugter mehr als 30 Masse-%, besonders bevorzugt mehr als 35 Masse-%, insbesondere bevorzugt mehr als 40 Masse-%

9. Verwendung eines Polysaccharid-Klebstoffs nach einem der Ansprüche 1 bis 7 zur Herstellung eines Klebstoffschaums.

10. Verfahren zur Herstellung eines Klebstoffschaums, wobei eine wässrige Suspension eines Polysaccharid-Klebstoffs nach einem der Ansprüche 1 bis 7 aufgeschäumt wird.

11. Verwendung von kovalent vernetzter Stärke als Bindemittel in einem Polysaccharid-Klebstoff nach einem der Ansprüche 1 bis 7.

12. Verwendung von kovalent vernetzter Stärke als Bindemittel zusammen mit einem Schaumerzeuger in einem Klebstoffschaum.
